# EUROPEAN PATENT SPECIFICATION

(11) **EP 3 192 322 B1**
(45) Date of publication and mention of the grant of the patent: **20.02.2019**
(21) Application number: 14901551.3
(22) Date of filing: 11.09.2014
(51) Int. Cl.: H04W 40/24, H04W 4/06, H04W 28/02, H04W 28/08, H04W 76/10, H04W 88/06, H04W 88/08

(54) **DELEGATE-BASED INTER-NETWORK COMMUNICATION**
DELEGATIONSBASERITE KOMMUNIKATION ZWISCHEN NETZWERKEN
COMMUNICATION INTER-RÉSEAU FAISANT APPEL À DES DÉLÉGUÉS

(43) Date of publication of application: 19.07.2017
(73) Proprietor: Telefonaktiebolaget LM Ericsson (publ), 164 83 Stockholm (SE)
(72) Inventor: LI, Gen, Beijing 100029 (CN); LIU, Jinhua, Beijing 100102 (CN); ZHANG, Zhan, Beijing 100102 (CN)
(74) Representative: Brann AB
(86) International application number: PCT/CN2014/086292
(87) International publication number: WO 2016/037337

(56) References cited:
- WO-A1-2011/021180
- CN-A- 101 262 696
- CN-A- 103 731 842
- US-A1- 2009 285 088
- JIM ALLEN EDITOR: SHERMAN GAVETTE (SLG): "P1901 TSG2 Draft Clause 12 ; P1901_TSG2-PM_0328_r00_Ch12r09_Editorial_S HMG", IEEE DRAFT; P1901_TSG2-PM_0328_R00_CH12R09_EDITORIAL_S HMG, IEEE-SA, PISCATAWAY, NJ USA, vol. 1901.TSG2-PM, no. r00, 17 December 2009 (2009-12-17), pages 1-36, XP017759033, [retrieved on 2009-12-20]
- "Implications of the proposed WirelessHUMAN ; 80216h-00_16", IEEE DRAFT; 80216H-00_16, IEEE-SA, PISCATAWAY, NJ USA, vol. 802.16h, 17 November 2000 (2000-11-17), pages 1-33, XP017776658, [retrieved on 2000-11-17]

## Description

### TECHNICAL FIELD

The present technology relates to the field of communication, particularly to a method of in a first communication entity of a first radio communication network for communicating with a second communication entity of a second radio communication network. The technology also relates to a communication entity and a computer readable storage medium for performing the method.

### BACKGROUND

Millimeter-wave (mmW) wireless systems are expected to be predominantly deployed at "high-capacity coverage islands", where a high traffic demand is expected or a high data speed per user is required. From a perspective of maximizing spectrum utilization, it is desirable to have each of the mmW networks to access a full bandwidth. In other words, two or multiple networks need to share a whole spectrum, even when operating in neighboring areas. Hence, one important aspect is dealing with inter-network interferences so as to achieve highest overall system capacity.

In order to realize the coordination among coexisting networks, it is required to communicate between networks to exchange information for coordination purposes. Currently, one existing solution to establish inter-network communication channels is the over-the-air communications introduced in IEEE 802.16H. In particular, a serving base station (BS) may send coordination messages to its neighbor BS via a forwarding user equipment (UE). The serving BS may send the request for accessing the neighbor BS to the forwarding UE. Upon receiving the request, the forwarding UE will try to access the neighbor BS following a procedure similar to the normal network entry process. If the forwarding UE accesses the neighbor BS successfully, it shall respond to the serving BS with a message that includes the parameter "the requested neighbor BS is accessed successfully". As such, the serving BS and its neighbor BS can communicate with each other via the forwarding UE.

However, it is not reliable to use a forwarding UE as the bridge node between different networks because there is a lot of uncertainty brought by mobility of UE and possible poor link quality between the UE and the BS. If the connection between different networks changes frequently due to unreliable UE, it is very likely that the coordination message is to be lost and thus the performance of both networks is impacted. In addition, the existing solution is not feasible for ultra-dense mmW networks. The inter-system communication via forwarding UE in 802.16H mainly presumes coordination for a small system scope composed by only one BS and its connected UEs. However, a typical ultra-dense network densely deploys multiple access points (APs, corresponding to BSs in 802.16h). Such simple peer-to-peer coordination between neighboring APs via a forwarding UE is not sufficient or feasible.

Document US 2009285088 discloses a method for realizing communication between different systems. A request for accessing a neighboring base station transmitted from a service base station is received by a repeater equipment and the neighboring base station is accessed as repeater equipment. The relay information is received by the repeater equipment and the repeater equipment is made to communicate with the service base station and the neighboring base station according to the relay information.

### SUMMARY

It's an object of the present disclosure to resolve or alleviate at least one of the problems mentioned above.

A first aspect of the present disclosure is a method in a first communication entity of a first radio communication network for communicating with a second communication entity of a second radio communication network. The method comprises selecting one or more communication nodes from the first radio communication network as one or more first delegates; for each of the one or more delegates, triggering the delegate to perform handshaking with one or more second delegates in the second radio communication network so as to find one or more counterpart delegates in the second radio communication network and establishing bridging connections between the first delegate and the one or more counterpart delegates, the one or more second delegates are selected by the second communication entity; and communicating with the second communication entity via at least one of the bridging connections.

A second aspect of the present disclosure is a computer readable storage medium storing instructions which, when run on a communication entity, cause the communication entity to perform the steps of the method as described above.

A third aspect of the invention is a first communication entity in a first radio communication network. The first communication entity is configured to communicate with a second communication entity in a second radio communication network. The first communication entity comprises a selecting unit, a connection establishing unit and a communicating unit. The selecting unit is adapted to select one or more communication nodes from the first radio communication network as one or more first delegates. The connection establishing unit is adapted to, for each of the one or more delegates, trigger the delegate to perform handshaking with one or more second delegates in the second radio communication network so as to find one or more counterpart delegates in the second radio communication network and establish bridging connections between the first delegate and said one or more counterpart delegates. The one or more second delegates being selected by the second communication entity. The communicating unit is adapted to communicate with the second communication entity via at least one of the bridging connections.

A fourth aspect of the present disclosure is a first communication entity in a first radio communication network. The first communication entity is configured to communicate with a second communication entity in a second radio communication network. The first communication entity comprises a processor and a memory. The memory contains instructions executable by the processor whereby the first communication entity is operative to select one or more communication nodes from the first radio communication network as one or more first delegates; for each of the one or more delegates, trigger the delegate to perform handshaking with one or more second delegates in the second radio communication network so as to find one or more counterpart delegates in the second radio communication network and establish bridging connections between the first delegate and the one or more counterpart delegates, the one or more second delegates being selected by the second communication entity; and communicate with the second communication entity via at least one of the bridging connections.

In the embodiments, each radio communication network has its delegates, and the delegates are utilized to establish bridge connection between the radio communication networks. In this way, the cross network communication between the first communication entity and the second communication entity via the bridge connection can be relayed by the delegates, and thus a stable communication channel is enabled for the communication.

### BRIEF DESCRIPTION OF THE DRAWINGS

The technology will be described, by way of example, based on embodiments with reference to the accompanying drawings, wherein:
Fig.1 illustrates an exemplary networking environment that is suitable for implementing the embodiments of the present disclosure
Fig.2 schematically illustrates a flowchart of communicating between the first communication entity of the first radio communication network and the second communication entity of the second radio communication network in accordance with an embodiment;
Fig.3 is a block diagram of an exemplary first communication entity in the first radio communication network configured to communicate with the second communication entity in the second radio communication network in accordance with an embodiment; and
Fig.4 illustrates a simplified block diagram of the first communication entity that is suitable for use in practicing exemplary embodiments of the present disclosure.

### DETAILED DESCRIPTION

Embodiments herein will be described more fully hereinafter with reference to the accompanying drawings. The embodiments herein may, however, be embodied in many different forms and should not be construed as limiting the scope of the appended claims. The elements of the drawings are not necessarily to scale relative to each other. Like numbers refer to like elements throughout.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Also, use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Unless otherwise defined, all terms (including technical and scientific terms) used herein have the same meaning as commonly understood. It will be further understood that terms used herein should be interpreted as having a meaning that is consistent with their meaning in the context of this specification and the relevant art and will not be interpreted in an idealized or overly formal sense unless expressly so defined herein.

The present technology is described below with reference to block diagrams and/or flowchart illustrations of methods, apparatus (systems) and/or computer program according to the present embodiments. It is understood that blocks of the block diagrams and/or flowchart illustrations, and combinations of blocks in the block diagrams and/or flowchart illustrations, may be implemented by computer program instructions. These computer program instructions may be provided to a processor, controller or controlling unit of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

Accordingly, the present technology may be embodied in hardware and/or in software (including firmware, resident software, micro-code, etc.). Furthermore, the present technology may take the form of a computer program on a computer-usable or computer-readable storage medium having computer-usable or computer-readable program code embodied in the medium for use by or in connection with an instruction execution system. In the context of this document, a computer-usable or computer-readable storage medium may be any medium that may contain, store, or is adapted to communicate the program for use by or in connection with the instruction execution system, apparatus, or device.

Although specific terms in some specifications are used here, such as AP, it should be understood that the embodiments are not limited to those specific terms but may be applied to all similar entities, such as base station, macro base station, femto base stations, Core Network (CN), NodeB, eNodeB etc.

Embodiments herein will be described below with reference to the drawings.

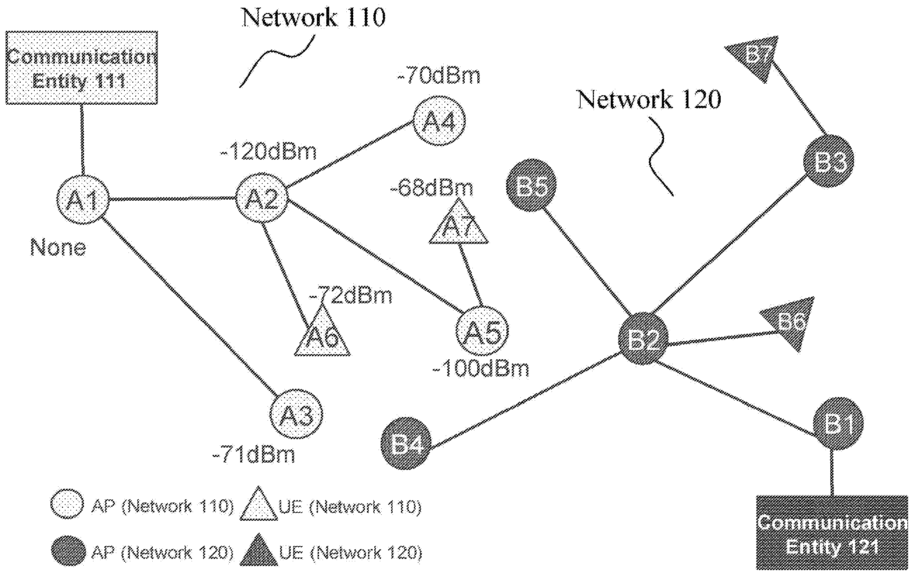

Fig.1 illustrates an exemplary networking environment that is suitable for implementing the embodiments of the present disclosure. As shown, there are two networks, network 110 and network 120 deployed in an overlapping area. The network 110 comprises a communication entity 111, the APs A1-A5 and the UEs A6-A7. The network 120 comprises a communication entity 121, the APs B1-B5 and the UEs B6-B7. Inside each network, there will be wireless backhaul connection between APs and data are finally routed to the wired network. These APs serve their associated UEs in a wireless link. The network 110 and the network 120 share a same radio resource pool for communication. Thus, interference between the two networks may happen frequently. In an embodiment, in order to cooperate among neighbor (or overlapped) networks in this aspect, a communication entity, for example the communication entity 120 or 121, is setup to centrally deal with the inter-network interference coordination issues in both of the networks. Here, the communication entity can be either an independent communication unit or integrated into an AP.

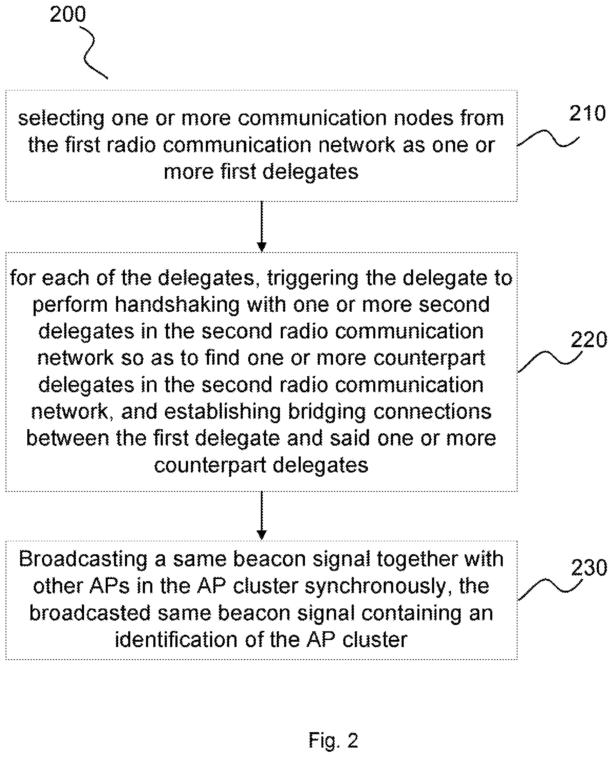

Fig.2 schematically illustrates a flowchart of communicating between the first communication entity 111 and the second communication entity 121 in accordance with an embodiment. Now the process of the embodiment will be described in detail with reference to the Fig.1 and Fig.2.

In block 210, the first communication entity 111 of the first radio communication network 110 selects one or more communication nodes, for example A1-A7, from the first radio communication network 110 as one or more first delegates.

In an embodiment, the first communication entity 111 may select the first delegates from A1-A7 based on received signal strengths of the one or more communication nodes from the second radio communication network 120. For example, the communication nodes A1-A7 may respectively make signal strength measurement on reference signal (or beacon signal) transmitted from the second radio communication network 120 and report the measured signal strength, e.g. the Reference Signal Received Power (RSRP), to the first communication entity 111. As such, the first communication entity 111 may select the top N communication nodes with the best RSRPs as the delegates. Alternatively, the first communication entity 111 may select the communication nodes with RSRP above a predefined threshold as the delegates. In this way, the selected delegates are closest to the second radio communication network 120, and thus may have high quality link with the communication nodes in the second communication network 120.

In another embodiment, the first communication entity 111 may select the delegates based on routing latencies from the communication nodes A1-A7 to the first communication entity 111. Specifically, if a communication node has shorter routing latency to the first communication entity 111 than another communication node, then the communication node is preferred to be selected as a delegate compared to the another communication node. The routing latency can be indicated by the number of hops from the communication node to the first communication entity 111, for example. The larger the number of the hops is, the longer the routing latency is.

In a preferred embodiment, the first communication entity 111 may select the delegates based on node types of the communication nodes A1-A7. The node types may comprise AP type and UE type. Different node types may have different priorities to be the delegate. Typically, an AP has a higher priority to be the delegate than an UE due to that the status of the AP is more stable and predictable, and thus a more robust communication channel can be enabled for the communication.

In a further embodiment, the first communication entity 111 may select the delegates based on a mobility of the communication nodes A1-A7. Specifically, a fixed communication node such as a fixed AP may have higher priority to be the delegate than a mobile communication node such as a mobile AP or UE. In addition, a communication node with lower mobile speed is more intended to be selected as the delegate in comparison with a communication node with higher mobile speed.

Alternatively, the first communication entity 111 may also take two or more of the above factors into account to select the delegates. As one example shown in Fig.1, the communication nodes A1-A7 measure the RSRP from the second radio communication network 120. For example, the node A7 can measure that the RSRP from nodes B5 and B2 is -68dBm and -102dBm respectively. Then the higher value -68dBm is labeled as the RSRP from the second radio communication network 120 for the node A7. In the similar way, the measured RSRPs for A1-A6 are none, -120dBm, -71dBm, -70dBm, -100dBm and -72dBm. If the minimum threshold is set to -80dBm, then node A3, A4, A6 and A7 will be selected as the delegates. Moreover, the nodes A3 and A4 are AP nodes, and thus have higher priority to be the delegate than the UE nodes A6 and A7. Meanwhile, the number of hops from the node A3 to the first communication entity 111 is 2 which is less than the number of hops from the node A4 to the first communication entity 111 3, hence A3 has a higher priority than A4. As a result, the overall priority order for the nodes is A3>A4>A7>A6. If the first communication entity 111 needs two delegates, then the nodes A3 and A4 will be selected as the delegates.

In block 220, the first communication entity 111 triggers each of the first delegates selected in block 210 to perform handshaking with one or more second delegates in the second radio communication network 120 so as to find one or more counterpart delegates in the second radio communication network 120 and establish bridging connections between the first delegate and the one or more counterpart delegates. The one or more second delegates are selected by the second communication entity 121. In an embodiment, the second communication entity 121 may do in the similar way as the first communication entity 111 to select the one or more second delegates from the communication nodes B1-B7 in the second radio communication network 120.

The handshaking process can be performed in the way of exchanging delegate identity, for example. In particular, the first delegate may broadcast a message indicating its delegate identity (ID) to the second radio communication network 120 for detection by the second delegates in the second radio communication network 120. The message may contain the information explicitly indicating that the source of the message is a delegate node. Alternatively, the delegate identity can also be indicated implicitly. Specifically, when a communication node is selected as the delegate, it will be allocated a special ID from a predefined ID range dedicated for delegates. For example, the specific ID range X1-Xn can be reserved for the AP delegates and specific ID range Y1-Yn can be reserved for the UE delegates. As such, the first delegate may simply broadcast it special ID to the second radio communication network 120. When a second delegate in the second radio communication 120 finds that the received ID is in the specific ranges, it can determine that a first delegate of the first radio communication network 110 is detected.

Meanwhile, the first delegate will also detect the second delegates in the second radio communication network 120 by receiving messages indicating their delegate identities broadcasted by the second delegates. If a first delegate of the first radio communication network 110 and a second delegate of the second radio communication network 120 can detect each other, then the second delegate is determined as a counterpart delegate of the first delegate. Theoretically, a first delegate may find one or more counterpart delegates in the second radio communication network 120. Since the first delegate and its counterpart can detect each other, they are suitable to establish a stable bridging connection therebetween for two-way communication between the first radio communication network 110 and the second radio communication network 120.

As an example, the nodes A3 and A4 are selected as the delegates for the first radio communication network 110, and the nodes B4 and B5 are selected as the delegates for the second radio communication network 120. In this case, the A3 and A4 may broadcast a system information signalling indicating their delegate identity to the second radio communication network 120 so as to be detected by B4 or B5. Meanwhile, the A3 and A4 will listen to a predetermined channel to detect the system information signalling broadcasted from B4 or B5. For example, A3 detects both B4 and B5, B4 detects A3, but B5 doesn't detect A3, hence A3 takes B4 as the counterpart delegate.

After finding the counterpart delegates in the second radio communication network 120, the first delegate in the first radio communication network 110 may establish bridging connections with the counterpart delegates. Specifically, if both of the delegates are APs, the connection establishment may follow the process of wireless backhaul link establishment. If one delegate is a UE and the other is an AP, they may follow the process of random access. If both delegates are UEs, they can establish the connection by means of device-to-device (D2D) connection process. It should be noted that this differentiates from the scheme in IEEE 802.16H where only one UE served by the serving BS is involved as a forwarding UE to accomplish the communication between the serving BS and the neighbor BS. Herein, a successful connection between the first delegate and its counterpart delegate is referred to as a bridge between the first radio communication network 110 and the second radio communication network 120.

In block 230, the first communication entity 111 communicates with the second communication entity 121 via at least one of the bridging connections. In particular, after the bridge connections are established successfully, the first delegates may report the bridge connections to the first communication entity 111, likewise the second delegates may report the bridge connections to the second communication entity 121. As such, the first communication entity 111 may select a bridge to communicate with the second communication entity 121, for example, for inter-network interference coordination. In an embodiment, the first communication entity 111 and the second communication entity 121 may negotiate to select one bridge for the two-way communication. In another embodiment, they may separately select the bridge for communication. For example, the first communication entity 111 may select a bridge A4-B5 to send the inter-network interference coordination message to the second communication entity 121, while the second communication entity 121 may select a bridge A3-B4 to respond to the first communication entity 111.

In the embodiments, each radio communication network has its delegates, and the delegates are utilized to establish bridge connection between the radio communication networks. In this way, the cross network communication between the first communication entity and the second communication entity via the bridge connection can be relayed by the delegates, and thus a stable communication channel is enabled for the communication. Especially, as known, the status of the AP is more stable and predictable than that of the UE. Hence, when the APs are used as the delegates to establish bridge connection, the inter-network communication channel can be more robust and better controlled.

Furthermore, the number of the first or second delegates selected can be determined at least based on an overlapped coverage between the first radio communication network 110 and the second radio communication network 120, the number of communication nodes within the overlapped coverage or a traffic load within the overlapped coverage. Generally, the more the expected communication traffic between the first radio communication network 110 and the second radio communication network 120 is, the larger the number of the delegates needed is. For example, a large overlapped coverage between the first radio communication network 110 and the second radio communication network 120 may indicate a large communication requirement therebetween for inter-network interference coordination. Hence, the larger the overlapped coverage is, the more the delegates are needed. Each of the delegates may be configured to be responsible for inter-network message exchange for different sub-areas of the overlapped coverage. Alternatively, the number of communication nodes within the overlapped coverage may indicate the potential inter-network communication traffic. The larger the number of the communication nodes within the overlapped coverage is, the more delegates are needed. Alternatively, the potential inter-network communication traffic can be indicated by the traffic load within the overlapped coverage. The number of the delegates needed is in proportion to the traffic load. As such, the inter-network communication traffic load can be shared by these delegates without resulting in overloading.

Now the process of selecting bridge for communication between the first communication entity 111 and the second communication entity 121 will be discussed.

In an embodiment, the first communication entity 111 may determine a bridging connection used for communication with the second communication entity 121 based on channel quality of the available bridging connections. Specifically, the first communication entity 111 may select one ore more bridging connections with the highest channel quality among the available bridging connections as the primary way to communicate with the second communication entity 121. Other bridging connections will be taken as the backup bridge. When some bridging connection in use is broken due to interference increase or power off, the first communication entity 111 may fall back to the backup bridges.

In another embodiment, the first communication entity 111 may determine a bridging connection used for the communication with the second communication entity 121 based on the traffic load therebetween. For example, as the traffic load increase, the bridges in use are not enough for inter-network exchanging. In this case, the first communication entity 111 may initiate further bridges for communication.

In a further embodiment, the first communication entity 111 may determine a bridging connection used for communication with the second communication entity 121 based on the communication tasks configured for the bridging connections. In particular, the first communication entity 111 may configure that the respective bridging connections are used to undertake different communication tasks, including coordination for a specific resource set and coordination on behalf of a specific sub-network or sub-area of the first radio communication network 110. For one example, the bridge A4-B5 is used to undertake the communication for coordinating the resource set of the above half subcarriers, while the bridge A3-B4 is used to undertake the communication for coordinating the resource set of the down half subcarriers. For another example, the bridge A3-B4 is used to undertake the communication for coordination on behalf of the sub-area covering A1, A3 and A6, and the bridge A4-B5 is used to undertake the communication for coordination on behalf of the sub-area covering A2, A4, A5 and A7.

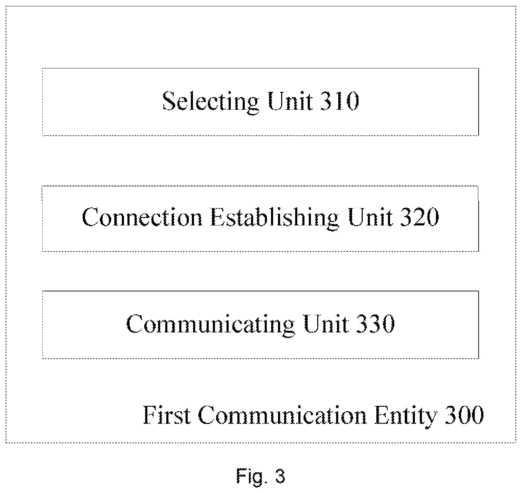

Fig.3 is a block diagram of an exemplary first communication entity 300 in the first radio communication network configured to communicate with the second communication entity in the second radio communication network in accordance with an embodiment. As shown, the first communication entity 300 comprises a selecting unit 310, a connection establishing unit 320 and a communicating unit 330. It should be appreciated that the first communication entity 300 is not limited by the shown elements, and can comprise other conventional elements and additional elements for other purposes. Now the functions of these elements will be described in detail with reference to Fig.3.

The selecting unit 310 of the communication entity 300 is adapted to select one or more communication nodes from the first radio communication network as one or more first delegates.

In an embodiment, the selecting unit 310 may select the first delegates based on received signal strengths of the one or more communication nodes from the second radio communication network. In another embodiment, the selecting unit 310 may select the delegates based on routing latencies from the communication nodes to the first communication entity 300. Specifically, if a communication node has shorter routing latency to the first communication entity 300 than another communication node, then the communication node is preferred to be selected as a delegate compared to the another communication node. Preferably, the selecting unit 310 may select the delegates based on node types of the communication nodes. The node types may comprise AP type and UE type. Different node types may have different priorities to be the delegate. Typically, an AP has a higher priority to be delegate than an UE due to that the status of the AP is more stable and predictable, and thus a more robust communication channel can be enabled for the communication. Additionally or alternatively, the selecting unit 310 may select the delegates based on a mobility of the communication nodes. In particular, a fixed communication node such as a fixed AP may have higher priority to be delegate than a mobile communication node such as a mobile AP or UE. In addition, a communication node with lower mobile speed is more intended to be selected as the delegate in comparison with a communication node with higher mobile speed.

The connection establishing unit 320 of the first communication entity 300 is adapted to trigger each of the first delegates selected by the selecting unit 310 to perform handshaking with one or more second delegates in the second radio communication network so as to find one or more counterpart delegates in the second radio communication network and establish bridging connections between the first delegate and the one or more counterpart delegates. The one or more second delegates are selected by the second communication entity. In practice, the second communication entity may do in the similar way as the first communication entity 300 to select the one or more second delegates from the communication nodes in the second radio communication network.

The handshaking can be performed in the way of exchanging delegate identity, for example. In particular, the first delegate may broadcast a message indicating its delegate identity (ID) to the second radio communication network for detection by the second delegates in the second radio communication network.

Meanwhile, the first delegate will also detect the second delegates in the second radio communication network by receiving messages indicating their delegate identities broadcasted by the second delegates. If a first delegate of the first radio communication network and a second delegate of the second radio communication network can detect each other, then the second delegate is determined as a counterpart delegate of the first delegate. Theoretically, a first delegate may find one or more counterpart delegates in the second radio communication network. Since the first delegate and its counterpart can detect each other, they are suitable to establish a stable bridging connection therebetween for two-way communication between the first radio communication network and the second radio communication network.

After finding the counterpart delegates in the second radio communication network, the first delegate in the first radio communication network may establish bridging connections with the counterpart delegates. Specifically, if both of the delegates are APs, the connection establishment may follow the process of wireless backhaul link establishment. If one delegate is a UE and the other is an AP, they may follow the process of random access. If both delegates are UEs, they can establish the connection by means of device-to-device (D2D) connection process.

The communicating unit 330 of the first communication entity 300 is adapted to communicate with the second communication entity via at least one of the bridging connections. In particular, after the bridge connections are established successfully, the first delegates may report the bridging connections to the first communication entity 300. As such, the communicating unit 330 may select a bridge to communicate with the second communication entity, for example, for inter-network interference coordination.

Furthermore, the number of the first or second delegates selected can be determined at least based on an overlapped coverage between the first radio communication network and the second radio communication network, the number of communication nodes within the overlapped coverage or a traffic load within the overlapped coverage. Generally, the more the expected communication traffic between the first radio communication network and the second radio communication network is, the larger the number of the delegates needed is. For example, a large overlapped coverage between the first radio communication network and the second radio communication network may indicate a large communication requirement therebetween for inter-network interference coordination. Hence, the larger the overlapped coverage is, the more the delegates are needed. Alternatively, the larger the number of the communication nodes within the overlapped coverage is, the more delegates are needed. Alternatively, the potential inter-network communication traffic can be indicated by the traffic load within the overlapped coverage. The number of the delegates needed is in proportion to the traffic load.

Now how the communicating unit 330 selects bridge for communication between the first communication entity 300 and the second communication entity will be further discussed.

In an embodiment, the communicating unit 330 may determine a bridging connection used for the communication with the second communication entity based on channel quality of the available bridging connections. Specifically, the communicating unit 330 may select one ore more bridging connections with the highest channel quality among the available bridging connections as the primary way to communicate with the second communication entity. Other bridging connections will be taken as the backup bridge.

In another embodiment, the communicating unit 330 may determine a bridging connection used for the communication with the second communication entity based on the traffic load therebetween. For example, as the traffic load increase, the bridges in use are not enough for inter-network exchanging. In this case, the communicating unit 330 may initiate further bridges for communication.

In a further embodiment, the communicating unit 330 may determine a bridging connection used for the communication with the second communication entity based on the communication tasks configured for the bridging connections. In particular, the communicating unit 330 may configure that the respective bridging connections are used to undertake different communication tasks, including coordination for a specific resource set and coordination on behalf of a specific sub-network or sub-area of the first radio communication network 110.

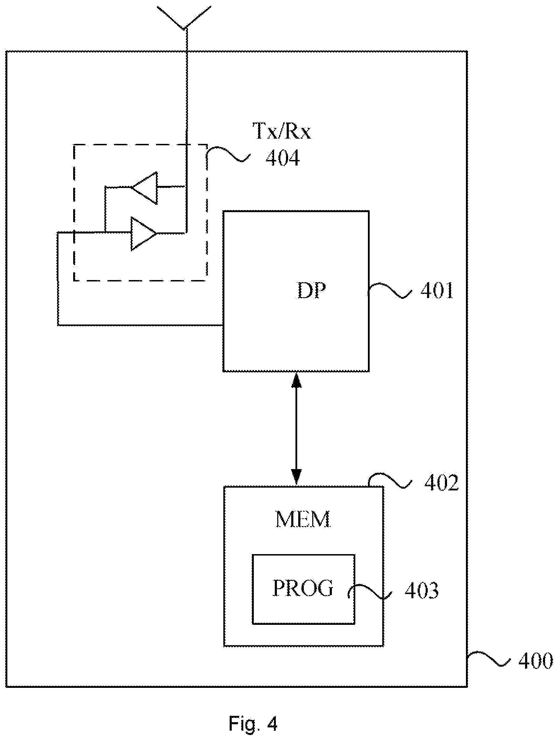

Fig.4 illustrates a simplified block diagram of a first communication entity 400 that is suitable for use in practicing exemplary embodiments of the present disclosure.

As shown in Fig.4, the first communication entity 400 includes a data processor (DP) 401, a memory (MEM) 402 coupled to the DP 401, and a suitable radio frequency transmitter TX and receiver RX 404 coupled to the DP 401. The MEM 402 stores a program (PROG) 403. The TX/RX 404 is for bidirectional wireless communications. The first communication entity 400 may be coupled via a data path to one or more external networks or systems, for example.

The PROG 403 is assumed to include program instructions that, when executed by the associated DP 401, enable the first communication entity 400 to operate in accordance with the exemplary embodiments of this disclosure, as discussed herein with the method in Fig.2. The embodiments of the present disclosure may be implemented by computer software executable by the DP 401 of the first communication entity 400, or by hardware, or by a combination of software and hardware.

The MEM 402 may be of any type suitable to the local technical environment and may be implemented using any suitable data storage technology, such as semiconductor based memory devices, magnetic memory devices and systems, optical memory devices and systems, fixed memory and removable memory, as non-limiting examples. While only one MEM is shown in the first communication entity 400, there may be several physically distinct memory units in the AP 400. The DP 401 may be of any type suitable to the local technical environment, and may include one or more of general purpose computers, special purpose computers, microprocessors, digital signal processors (DSPs) and processors based on multi-core processor architecture, as non limiting examples. The first communication entity 400 may have multiple processors, such as for example an application specific integrated circuit chip that is slaved in time to a clock which synchronizes the main processor.

While the embodiments have been illustrated and described herein, it will be understood by those skilled in the art that various changes and modifications may be made, any equivalents may be substituted for elements thereof without departing from the true scope of the present technology. In addition, many modifications may be made to adapt to a particular situation and the teaching herein without departing from its central scope. Therefore it is intended that the present embodiments not be limited to the particular embodiment disclosed as the best mode contemplated for carrying out the present technology, but that the present embodiments include all embodiments falling within the scope of the appended claims.

## Claims

1. A method (200) in a first communication entity (111) of a first radio communication network (110) for communicating with a second communication entity (121) of a second radio communication network (120), comprising:
selecting (210) one or more communication nodes (A1-A7) from the first radio communication network (110) as one or more first delegates;
for each of the one or more first delegates, triggering the first delegate to perform handshaking with one or more second delegates in the second radio communication network (120) so as to find one or more counterpart delegates in the second radio communication network (120), said one or more second delegates being selected by the second communication entity (121), and establishing (220) bridging connections between the first delegate and said one or more counterpart delegates; and
communicating (230) with the second communication entity (121) via at least one of the bridging connections.

2. The method of claim 1, wherein the selecting step (210) comprises selecting the one or more communication nodes at least based on received signal strengths of the one or more communication nodes from the second radio communication network (120), node types of the one or more communication nodes, a mobility of the one or more communication nodes, or routing latencies from the one or more communication nodes to the first communication entity (111).

3. The method of claim 1 or 2, wherein a number of the first or second delegates selected is determined at least based on an overlapped coverage between the first radio communication network (110) and the second radio communication network (120), a number of communication nodes within the overlapped coverage, or a traffic load within the overlapped coverage.

4. The method of claim 1, 2, or 3, wherein the triggering the first delegate to perform handshaking with the one or more second delegates in the second radio communication network (120) comprises:
the first delegate broadcasts a message indicating delegate identity of the first delegate to the second radio communication network (120) for detection by the one or more second delegates in the second radio communication network (120), and
the first delegate detects the one or more second delegates in the second radio communication network (120) by receiving messages indicating their delegate identities broadcasted by the one or more second delegates,
wherein if the first delegate detects a second delegate in the second radio communication network (120) and the second delegate also detects the first delegate, the second delegate is determined as a counterpart delegate of the first delegate.

5. The method of claim 1, 2, 3, or 4, wherein said at least one of the bridging connections used for the communication between the first communication entity (111) and the second communication entity (121) is determined at least based on channel quality of the bridging connections, a traffic load between the first communication entity (111) and the second communication entity (121), or communication tasks configured for the bridging connections, and the communication tasks comprise coordination for a specific resource set and coordination on behalf of a specific sub-network of the first radio communication network (110).

6. The method of any one of the preceding claims, wherein the first radio communication network (110) and the second radio communication network (120) are neighboring networks and the first communication entity (111) communicates with the second communication entity (121) for inter-network interference coordination.

7. The method of any one of the preceding claims, wherein the first or second delegate is an access point node.

8. A first communication entity (300) in a first radio communication network configured to communicate with a second communication entity in a second radio communication network, comprising:
a selecting unit (310) adapted to select one or more communication nodes from the first radio communication network as one or more first delegates;
a connection establishing unit (320) adapted to, for each of the one or more first delegates, trigger the first delegate to perform handshaking with one or more second delegates in the second radio communication network so as to find one or more counterpart delegates in the second radio communication network, said one or more second delegates being selected by the second communication entity, and establish bridging connections between the first delegate and said one or more counterpart delegates; and
a communicating unit (330) adapted to communicate with the second communication entity via at least one of the bridging connections.

9. The first communication entity of claim 8, wherein the selecting unit (310) is adapted to select the one or more communication nodes at least based on received signal strengths of the one or more communication nodes from the second radio communication network, node types of the one or more communication nodes, a mobility of the one or more communication nodes, or routing latencies from the one or more communication nodes to the first communication entity.

10. The first communication entity of claim 8 or 9, wherein a number of the first or second delegates selected is determined at least based on an overlapped coverage between the first radio communication network and the second radio communication network, a number of communication nodes within the overlapped coverage, or a traffic load within the overlapped coverage.

11. The first communication entity of claim 8, 9, or 10, wherein said at least one of the bridging connections used for the communication between the first communication entity and the second communication entity is determined at least based on channel quality of the bridging connections, a traffic load between the first communication entity and the second communication entity, or communication tasks configured for the bridging connections, and the communication tasks comprise coordination for a specific resource set and coordination on behalf of a specific sub-network of the first radio communication network.

12. The first communication entity of claim 8, 9, 10, or 11, the first or second communication entity is an access point node.

13. A computer readable storage medium which stores instructions which, when run on a first communication entity, cause the apparatus to perform the steps of the method according to any one of the claims 1-7.

14. A first communication entity (400) in a first radio communication network configured to communicate with a second communication entity in a second radio communication network, comprising a processor (401) and a memory (402), said memory (402) containing instructions executable by said processor (401) whereby said first communication entity (400) is operative to:
select one or more communication nodes from the first radio communication network as one or more first delegates;
for each of the one or more first delegates, trigger the first delegate to perform handshaking with one or more second delegates in the second radio communication network so as to find one or more counterpart delegates in the second radio communication network, said one or more second delegates being selected by the second communication entity, and establish bridging connections between the first delegate and said one or more counterpart delegates; and
communicate with the second communication entity via at least one of the bridging connections.

## Patentansprüche

1. Verfahren (200) in einer ersten Kommunikationseinheit (111) eines ersten Funkkommunikationsnetzes (110) zum Kommunizieren mit einer zweiten Kommunikationseinheit (121) eines zweiten Funkkommunikationsnetzes (120), Folgendes umfassend:
Auswählen (210) eines oder mehrerer Kommunikationsknoten (A1-A7) aus dem ersten Funkkommunikationsnetz (110) als einen oder mehrere erste Delegaten;
bei jedem des ersten oder der mehreren ersten Delegaten, Auslösen des ersten Delegaten zum Durchführen eines Handshakes mit einem oder mehreren zweiten Delegaten im zweiten Funkkommunikationsnetz (120), um eine oder mehrere Delegat-Entsprechungen im zweiten Funkkommunikationsnetz (120) zu finden, wobei der eine oder die mehreren Delegaten von der zweiten Kommunikationseinheit (121) ausgewählt werden und (220) Überbrückungsverbindungen zwischen dem ersten Delegaten und der einen oder den mehreren Delegat-Entsprechungen hergestellt werden; und
Kommunizieren (230) mit der zweiten Kommunikationseinheit (121) über mindestens eine der Überbrückungsverbindungen.

2. Verfahren nach Anspruch 1, wobei der Schritt des Auswählens (210) umfasst, einen oder mehrere Kommunikationsknoten mindestens basierend auf empfangenen Signalstärken des einen oder der mehreren Kommunikationsknoten aus dem zweiten Funkkommunikationsnetz (120), Knotentypen des einen oder der mehreren Kommunikationsknoten, eine Mobilität des einen oder der mehreren Kommunikationsknoten oder Routing-Latenzen von der einen oder den mehreren Kommunikationsknoten zu der ersten Kommunikationseinheit (111) auszuwählen.

3. Verfahren nach Anspruch 1 oder 2, wobei eine Anzahl der ersten oder zweiten Delegaten zumindest teilweise basierend auf einer sich überschneidenden Reichweite zwischen dem ersten Funkkommunikationsnetz (110) und dem zweiten Funkkommunikationsnetz (120), einer Anzahl von Kommunikationsknoten innerhalb der sich überschneidenden Reichweite oder einer Verkehrsbelastung innerhalb der sich überschneidenden Reichweite basiert.

4. Verfahren nach Anspruch 1, 2 oder 3, wobei das Auslösen des ersten Delegaten zum Durchführen des Handshakes mit dem einen oder mehreren zweiten Delegaten im zweiten Funkkommunikationsnetz (120) Folgendes umfasst:
der erste Delegat sendet eine Nachricht, welche die Delegat-Identität des ersten Delegaten angibt, an das erste Funkkommunikationsnetz (120), um durch den einen oder die mehreren zweiten Delegaten im zweiten Funkkommunikationsnetz (120) detektiert zu werden, und
der erste Delegat detektiert den einen oder die mehreren Delegaten im zweiten Funkkommunikationsnetz (120) durch Empfangen von Nachrichten, die ihre Delegat-Identitäten angeben, die von dem einen oder den mehreren zweiten Delegaten gesendet werden,
wobei, wenn der erste Delegat einen zweiten Delegaten im zweiten Funkkommunikationsnetz (120) detektiert und der zweite Delegat ebenfalls den ersten Delegaten detektiert, der zweite Delegat als eine Delegat-Entsprechung des ersten Delegaten bestimmt wird.

5. Verfahren nach Anspruch 1, 2, 3 oder 4, wobei mindestens eine der Überbrückungsverbindungen, die zur Kommunikation zwischen der ersten Kommunikationseinheit (111) und der zweiten Kommunikationseinheit (121) benutzt werden, basierend auf einer Kanalqualität der Überbrückungsverbindungen, einer Verkehrsbelastung zwischen der ersten Kommunikationseinheit (111) und der zweiten Kommunikationseinheit (121) oder Kommunikationsaufgaben, die für die Überbrückungsverbindungen konfiguriert sind, bestimmt wird, und die Kommunikationsaufgaben umfassen eine Koordination für einen spezifischen Ressourcensatz und eine Koordination im Auftrag eines spezifischen Teilnetzes des ersten Funkkommunikationsnetzes (110).

6. Verfahren nach einem der vorangehenden Ansprüche, wobei das erste Funkkommunikationsnetz (110) und das zweite Funkkommunikationsnetz (120) benachbarte Netze sind und die erste Kommunikationseinheit (111) mit der zweiten Kommunikationseinheit (121) zur Zwischennetz-Interferenzkoordination mit der zweiten Kommunikationseinheit kommuniziert.

7. Verfahren nach einem der vorangehenden Ansprüche, wobei der erste oder zweite Delegat ein Zugriffspunktknoten ist.

8. Erste Kommunikationseinheit (300) in einem ersten Funkkommunikationsnetz, die dazu konfiguriert ist, mit einer zweiten Kommunikationseinheit in einem zweiten Kommunikationsnetz zu kommunizieren, Folgendes umfassend:
eine auswählende Einheit (310), die dazu ausgebildet ist, einen oder mehrere Kommunikationsknoten aus einem ersten Kommunikationsnetz als einen oder mehrere erste Delegaten auszuwählen;
eine verbindungsherstellende Einheit (320), die dazu ausgebildet ist, bei jedem des ersten oder der mehreren ersten Delegaten den ersten Delegaten zum Durchführen eines Handshakes mit einem oder mehreren zweiten Delegaten im zweiten Funkkommunikationsnetz auszulösen, um eine oder mehrere Delegat-Entsprechungen im zweiten Funkkommunikationsnetz zu finden, wobei der eine oder die mehreren Delegaten von der zweiten Kommunikationseinheit ausgewählt werden und Überbrückungsverbindungen zwischen dem ersten Delegaten und der einen oder den mehreren Delegat-Entsprechungen hergestellt werden; und
eine kommunizierende Einheit (330), die dazu ausgebildet ist, mit der zweiten Kommunikationseinheit über mindestens eine der Überbrückungsverbindungen zu kommunizieren.

9. Kommunikationseinheit nach Anspruch 8, wobei die auswählende Einheit (310) dazu ausgebildet ist, den einen oder die mehreren Kommunikationsknoten mindestens basierend auf empfangenen Signalstärken des einen oder der mehreren Kommunikationsknoten aus dem zweiten Funkkommunikationsnetz, Knotentypen des einen oder der mehreren Kommunikationsknoten, einer Mobilität des einen oder der mehreren Kommunikationsknoten oder Routing-Latenzen von der einen oder den mehreren Kommunikationsknoten zu der ersten Kommunikationseinheit auszuwählen.

10. Erste Kommunikationseinheit nach Anspruch 8 oder 9, wobei eine Anzahl der ersten oder zweiten Delegaten zumindest teilweise basierend auf einer sich überschneidenden Reichweite zwischen dem ersten Funkkommunikationsnetz und dem zweiten Funkkommunikationsnetz, einer Anzahl von Kommunikationsknoten innerhalb der sich überschneidenden Reichweite oder einer Verkehrsbelastung innerhalb der sich überschneidenden Reichweite basiert.

11. Erste Kommunikationseinheit nach Anspruch 8, 9 oder 10, wobei die mindestens eine der Überbrückungsverbindungen, die zur Kommunikation zwischen der ersten Kommunikationseinheit und der zweiten Kommunikationseinheit benutzt werden, basierend auf einer Kanalqualität der Überbrückungsverbindungen, einer Verkehrsbelastung zwischen der ersten Kommunikationseinheit und der zweiten Kommunikationseinheit oder Kommunikationsaufgaben, die für die Überbrückungsverbindungen konfiguriert sind, bestimmt wird, und die Kommunikationsaufgaben eine Koordination für einen spezifischen Ressourcensatz und eine Koordination im Auftrag eines spezifischen Teilnetzes des ersten Funkkommunikationsnetzes umfassen.

12. Erste Kommunikationseinheit nach Anspruch 8, 9, 10 oder 11, wobei die erste oder zweite Kommunikationseinheit ein Zugriffspunktknoten ist.

13. Computerlesbares Speichermedium, das Anweisungen speichert, die bei Ausführung in einer ersten Kommunikationseinheit die Vorrichtung dazu veranlassen, die Schritte des Verfahrens gemäß einem der Ansprüche 1-7 durchzuführen.

14. Erste Kommunikationseinheit (400) in einem ersten Funkkommunikationsnetz, die dazu konfiguriert ist, mit einer zweiten Kommunikationseinheit in einem zweiten Funkkommunikationsnetz zu kommunizieren, die einen Prozessor (401) und einen Speicher (402) umfasst, wobei der Speicher (402) Anweisungen enthält, die von dem Prozessor (401) ausführbar sind, wobei die erste Kommunikationseinheit (400) zu Folgendem betrieben werden kann:
Auswählen eines oder mehrerer Kommunikationsknoten aus dem ersten Funkkommunikationsnetz als einen oder mehrere erste Delegaten;
bei jedem des ersten oder der mehreren ersten Delegaten, Auslösen des ersten Delegaten zum Durchführen eines Handshakes mit einem oder mehreren zweiten Delegaten im zweiten Funkkommunikationsnetz, um eine oder mehrere Delegat-Entsprechungen im zweiten Funkkommunikationsnetz zu finden, wobei der eine oder die mehreren Delegaten von der zweiten Kommunikationseinheit ausgewählt werden und Überbrückungsverbindungen zwischen dem ersten Delegaten und der einen oder den mehreren Delegat-Entsprechungen hergestellt werden; und
Kommunizieren mit der zweiten Kommunikationseinheit über mindestens eine der Überbrückungsverbindungen.

## Revendications

1. Procédé (200) dans une première entité de communication (111) d'un premier réseau de communication radio (110) pour communiquer avec une seconde entité de communication (121) d'un second réseau de communication radio (120), comprenant :
la sélection (210) d'un ou plusieurs noeuds de communication (A1-A7) dans le premier réseau de communication radio (110) en tant qu'un ou plusieurs premiers délégués ;
pour chacun des un ou plusieurs premiers délégués, le déclenchement de l'établissement d'une liaison entre le premier délégué et un ou plusieurs seconds délégués dans le second réseau de communication radio (120) de sorte à trouver un ou plusieurs délégués homologues dans le second réseau de communication radio (120), lesdits un ou plusieurs seconds délégués étant sélectionnés par la seconde entité de communication (121), et l'établissement (220) de connexions de pontage entre le premier délégué et lesdits un ou plusieurs délégués homologues ; et
la communication (230) avec la seconde entité de communication (121) par l'intermédiaire d'au moins une des connexions de pontage.

2. Procédé selon la revendication 1, dans lequel l'étape de sélection (210) comprend la sélection du ou des noeuds de communication au moins sur la base des intensités des signaux reçus du ou des noeuds de communication du second réseau de communication radio (120), des types de noeuds du ou des noeuds de communication, d'une mobilité du ou des noeuds de communication, ou des latences de routage du ou des noeuds de communication vers la première entité de communication (111).

3. Procédé selon la revendication 1 ou 2, dans lequel un certain nombre des premiers ou seconds délégués sélectionnés est déterminé au moins sur la base d'une couverture en chevauchement entre le premier réseau de communication radio (110) et le second réseau de communication radio (120), d'un certain nombre de noeuds de communication au sein de la couverture en chevauchement, ou d'une densité de trafic au sein de la couverture en chevauchement.

4. Procédé selon la revendication 1, 2, ou 3, dans lequel le déclenchement de l'établissement d'une liaison entre le premier délégué et le ou les seconds délégués dans le second réseau de communication radio (120) comprend :
la diffusion, par le premier délégué, d'un message indiquant une identité de délégué du premier délégué au second réseau de communication radio (120) destiné à être détecté par le ou les seconds délégués dans le second réseau de communication radio (120), et
la détection, par le premier délégué, du ou des seconds délégués dans le second réseau de communication radio (120) par la réception des messages indiquant les identités de leurs délégués diffusés par le ou les seconds délégués,
dans lequel, si le premier délégué détecte un second délégué dans le second réseau de communication radio (120) et le second délégué détecte également le premier délégué, le second délégué est déterminé comme délégué homologue du premier délégué.

5. Procédé selon la revendication 1, 2, 3, ou 4, dans lequel ladite au moins une des connexions de pontage utilisée pour la communication entre la première entité de communication (111) et la seconde entité de communication (121) est déterminée au moins sur la base de la qualité de canal des connexions de pontage, d'une densité de trafic entre la première entité de communication (111) et la seconde entité de communication (121), ou des tâches de communication configurées pour les connexions de pontage, et les tâches de communication comprennent la coordination d'un ensemble de ressources spécifiques et la coordination du premier réseau de communication radio (110) pour le compte d'un sous-réseau spécifique.

6. Procédé selon l'une quelconque des revendications précédentes, dans lequel le premier réseau de communication radio (110) et le second réseau de communication radio (120) sont des réseaux voisins et la première entité de communication (111) communique avec la seconde entité de communication (121) pour une coordination d'interférences inter-réseaux.

7. Procédé selon l'une quelconque des revendications précédentes, dans lequel le premier ou second délégué est un noeud de point d'accès.

8. Première entité de communication (300) dans un premier réseau de communication radio configurée pour communiquer avec une seconde entité de communication dans un second réseau de communication radio, comprenant :
une unité de sélection (310) conçue pour sélectionner un ou plusieurs noeuds de communication dans le premier réseau de communication radio en tant qu'un ou plusieurs premiers délégués ;
une unité d'établissement de connexion (320) conçue pour déclencher, pour chacun des un ou plusieurs premiers délégués, l'établissement d'une liaison entre le premier délégué et un ou plusieurs seconds délégués dans le second réseau de communication radio de sorte à trouver un ou plusieurs délégués homologues dans le second réseau de communication radio, lesdits un ou plusieurs seconds délégués étant sélectionnés par la seconde entité de communication, et établir des connexions de pontage entre le premier délégué et lesdits un ou plusieurs délégués homologues ; et
une unité de communication (330) conçue pour communiquer avec la seconde entité de communication par l'intermédiaire d'au moins une des connexions de pontage.

9. Première entité de communication selon la revendication 8, dans laquelle l'unité de sélection (310) est conçue pour sélectionner le ou les noeuds de communication au moins sur la base des intensités des signaux reçus du ou des noeuds de communication du second réseau de communication radio, des types de noeuds du ou des noeuds de communication, d'une mobilité du ou des noeuds de communication, ou des latences de routage du ou des noeuds de communication vers la première entité de communication.

10. Première entité de communication selon la revendication 8 ou 9, dans laquelle un certain nombre des premiers ou seconds délégués sélectionnés est déterminé au moins sur la base d'une couverture en chevauchement entre le premier réseau de communication radio et le second réseau de communication radio, d'un certain nombre de noeuds de communication au sein de la couverture en chevauchement, ou d'une densité de trafic au sein de la couverture en chevauchement.

11. Première entité de communication selon la revendication 8, 9, ou 10, dans laquelle ladite au moins une des connexions de pontage utilisée pour la communication entre la première entité de communication et la seconde entité de communication est déterminée au moins sur la base de la qualité de canal des connexions de pontage, d'une densité de trafic entre la première entité de communication et la seconde entité de communication, ou des tâches de communication configurées pour les connexions de pontage, et les tâches de communication comprennent la coordination d'un ensemble de ressources spécifiques et la coordination du premier réseau de communication radio pour le compte d'un sous-réseau spécifique.

12. Première entité de communication selon la revendication 8, 9, 10, ou 11, la première ou seconde entité de communication étant un noeud de point d'accès.

13. Support de mémoire lisible par ordinateur qui mémorise des instructions qui, lorsqu'elles sont exécutées sur une première entité de communication, amènent l'appareil à réaliser les étapes du procédé selon l'une quelconque des revendications 1-7.

14. Première entité de communication (400) dans un premier réseau de communication radio configurée pour communiquer avec une seconde entité de communication dans un second réseau de communication radio, comprenant un processeur (401) et une mémoire (402), ladite mémoire (402) contenant des instructions exécutables par ledit processeur (401) moyennant quoi ladite première entité de communication (400) est destinée à :
sélectionner un ou plusieurs noeuds de communication dans le premier réseau de communication radio en tant qu'un ou plusieurs premiers délégués ;
pour chacun des un ou plusieurs premiers délégués, déclencher l'établissement d'une liaison entre le premier délégué et un ou plusieurs seconds délégués dans le second réseau de communication radio de sorte à trouver un ou plusieurs délégués homologues dans le second réseau de communication radio, lesdits un ou plusieurs seconds délégués étant sélectionnés par la seconde entité de communication, et établir des connexions de pontage entre le premier délégué et lesdits un ou plusieurs délégués homologues ; et
communiquer avec la seconde entité de communication par l'intermédiaire d'au moins une des connexions de pontage.
